(19) Europäisches Patentamt
European Patent Office
Office européen des brevets

(11) **EP 4 765 244 A1**

(12) **EUROPEAN PATENT APPLICATION**
published in accordance with Art. 153(4) EPC

(43) Date of publication:
**24.06.2026 Bulletin 2026/26**

(21) Application number: **24871559.1**

(22) Date of filing: **14.08.2024**

(51) International Patent Classification (IPC):
*H01M 4/38* (2006.01)    *H01M 4/134* (2010.01)
*H01M 4/1395* (2010.01)    *H01M 4/62* (2006.01)
*H01M 10/052* (2010.01)    *H01M 10/0562* (2010.01)

(52) Cooperative Patent Classification (CPC):
**H01M 4/134; H01M 4/1395; H01M 4/38;**
**H01M 4/62; H01M 10/052; H01M 10/0562;**
**Y02E 60/10**

(86) International application number:
**PCT/JP2024/028971**

(87) International publication number:
**WO 2025/069757 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 JP 2023168609**

(71) Applicant: **TOYOTA JIDOSHA KABUSHIKI
KAISHA
Toyota-Shi,
Aichi-Ken 471-8571 (JP)**

(72) Inventors:
• **OTAKI, Mitsutoshi
Toyota-shi, Aichi 471-8571 (JP)**
• **YOSHIDA, Jun
Toyota-shi, Aichi 471-8571 (JP)**
• **NOSE, Masafumi
Toyota-shi, Aichi 471-8571 (JP)**

(74) Representative: **D Young & Co LLP
3 Noble Street
London EC2V 7BQ (GB)**

(54) **ELECTRODE ACTIVE MATERIAL, ELECTRODE MIXTURE, BATTERY, AND METHODS FOR PRODUCING SAME**

(57)    A main object of the present disclosure is to provide an electrode active material of which volume change due to charge and discharge is small. The present disclosure achieves the object by providing an electrode active material including a silicon clathrate II type crystal phase, wherein a crystallite size of the crystal phase is 125 nm or more and 215 nm or less.

[FIG. 1]

(a) Clathrate II type    (b) Diamond type

## Description

Technical Field

The present disclosure relates to an electrode active material, an electrode mixture, a battery, and a method for producing these.

Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. Also, as an electrode active material used for a battery, a Si (silicon) has been known. For example, Patent Literature 1 discloses an electrode active material including a silicon clathrate II type crystal phase and a void inside a primary particle.

Citation List

Patent Documents

Patent Literature 1: Japanese Patent Application Laid-Open (JP-A) No. 2021-158004

Summary

Technical Problem

The theoretical capacity of Si is large and it is advantageous to allow a battery to have high energy density. On the other hand, the volume change of Si during charge and discharge is large. When the volume change during charge and discharge is large, for example, there is a problem such that the function of an electrode active material tends to be degraded when charge and discharge are repeated.

The present disclosure has been made in view of the above circumstances and a main object thereof is to provide an electrode active material of which volume change due to charge and discharge is small.

Solution to Problem

The inventors of the present disclosure have pursued earnest studies about achieving the object and obtained a knowledge that the volume change during charging and discharging is suppressed when an electrode active material includes a little diamond type silicon crystal phase in addition to a silicon clathrate II type crystal phase. At the same time, the inventors of the present disclosure have obtained a new knowledge that there is a difference in volume change during charging and discharging even when the ratio of the diamond type silicon crystal phase in the electrode active material is about the same. The inventors of the present disclosure have studied about the cause of the difference in detail, and found out that the crystallite size of the silicon clathrate II type crystal phase gave great effect to the volume change during charging and discharging, which led to the completion of the below inventions.

[1] An electrode active material comprising a silicon clathrate II type crystal phase, wherein a crystallite size of the crystal phase is 125 nm or more and 215 nm or less.
[2] The electrode active material according to [1], wherein the crystallite size of the crystal phase is 130 nm or more and 180 nm or less.
[3] The electrode active material according to [1] or [2], wherein a ratio of a diamond type silicon crystal phase included in the electrode active material is 0 weight% or more and 3 weight% or less.
[4] The electrode active material according to any one of [1] to [3], wherein a ratio of a diamond type silicon crystal phase included in the electrode active material is 0.2 weight% or more and 3 weight% or less.
[5] The electrode active material according to any one of [1] to [4], wherein the electrode active material includes the silicon clathrate II type crystal phase as a main phase.
[6] The electrode active material according to any one of [1] to [5], wherein the electrode active material includes a void inside a primary particle.
[7] The electrode active material according to [6], wherein a ratio of the void is 4% or more and 40% or less.
[8] An electrode mixture comprising the electrode active material according to any one of [1] to [7], and at least one of a conductive material and a binder.

[9] The electrode mixture according to [8], further comprising a solid electrolyte.

[10] The electrode mixture according to [9], wherein the solid electrolyte included in the electrode mixture is a sulfide solid electrolyte.

[11] A battery comprising a cathode layer, an anode layer, and an electrolyte layer arranged between the cathode layer and the anode layer, wherein

the cathode layer or the anode layer contains the electrode mixture according to any one of [8] to [10].

[12] The battery according to [11], wherein the anode layer contains the electrode mixture.

[13] The battery according to [11] or [12], wherein the electrolyte layer contains a solid electrolyte.

[14] The battery according to [13], wherein the solid electrolyte included in the electrolyte layer is a sulfide solid electrolyte, and

a thickness of the electrolyte layer is 0.1 $\mu$m or more and 100 $\mu$m or less.

[15] The battery according to any one of [11] to [14], wherein the cathode layer includes a rock salt layered type active material.

[16] A method for producing an electrode active material, the method comprising:

an alloying step of reacting a Na source and a Si source to obtain a Na-Si alloy, and

a firing step of firing the Na-Si alloy to reduce an amount of Na in the Na-Si alloy and generate a silicon clathrate II type crystal phase, wherein

the firing step includes at least:

a first firing treatment of firing the Na-Si alloy at a temperature of less than 340°C, and

a second firing treatment of firing a compound subjected to the first firing treatment at a temperature of 340°C or more.

[17] The method for producing the electrode active material according to [16], wherein a firing condition is adjusted in the firing step so that a crystallite size of the crystal phase becomes 125 nm or more and 215 nm or less.

[18] A method for producing an electrode mixture, the method comprising:

a preparing step of preparing an electrode active material by the method for producing an electrode active material according to [16] or [17], and

a mixing step of mixing the electrode active material and at least one of a conductive material and a binder to obtain an electrode mixture.

[19] A method for producing a battery, the method comprising:

a preparing step of preparing an electrode active material by the method for producing an electrode active material according to [16] or [17],

a mixing step of mixing the electrode active material and at least one of a conductive material and a binder to obtain an electrode mixture, and

an electrode layer forming step of forming an electrode layer using the electrode mixture.

Advantageous Effects

The present disclosure exhibits an effect such that an electrode active material of which volume change due to charge and discharge is small is obtained.

Brief Description of Drawings

[FIG. 1] are schematic perspective views explaining the crystal phase of Si.

[FIG. 2] is a schematic cross-sectional view exemplifying the battery in the present disclosure.

[FIG. 3] is a flow chart exemplifying the method for producing the electrode active material in the present disclosure.

[FIG. 4] is the result of volume expansion rate of the batteries using the electrode active materials obtained in Examples 1 to 5 and Comparative Examples 1 and 2.

Description of Embodiments

The electrode active material, the electrode mixture, the battery, and the method for producing these in the present disclosure will be hereinafter explained in details.

A. Electrode active material

The electrode active material in the present disclosure includes a silicon clathrate II type crystal phase. Further, the crystallite size of the silicon clathrate II type crystal phase is usually 125 nm or more and 215 nm or less.

According to the present disclosure, the crystallite size of the silicon clathrate II type crystal phase is in the specified range, and thus the volume change of the electrode active material due to charge and discharge is small. As described above, the theoretical capacity of Si is large and it is advantageous to allow a battery to have high energy density. On the other hand, the volume change of Si during charge and discharge is large. When the volume change during charge and discharge is large, for example, there is a problem such that the function of an electrode active material tends to be degraded when charge and discharge are repeated. To such a problem, the inventors of the present disclosure have pursued earnest studies and obtained a knowledge that the volume change during charging and discharging is suppressed when an electrode active material includes a little diamond type silicon crystal phase in addition to the silicon clathrate II type crystal phase.

At the same time, the inventors of the present disclosure have obtained a new knowledge that there is a difference in volume change during charging and discharging even when the ratio of the diamond type silicon crystal phase in the electrode active material is about the same. In other words, they obtained a new knowledge that there is a phenomenon which cannot be explained by just a ratio of the diamond type silicon crystal phase. Then, the inventors of the present disclosure have studied about the cause of the difference in details, and found out that the crystallite size of the silicon clathrate II type crystal phase gives great effect to the volume change during charging and discharging.

In specific, the inventors of the present disclosure have found out that the volume change during charging and discharging can be suppressed by adjusting the crystallite size of the silicon clathrate II type crystal phase comparatively small. The reason why the volume change can be suppressed is presumed that, when the crystallite size is adjusted comparatively small, the Li dispersibility inside the particle of the electrode active material becomes fast, and the reaction unevenness inside the particle can be inhibited. Meanwhile, they have also found out that the volume change cannot be suppressed when the crystallite size of the silicon clathrate II type crystal phase is made too small. The reason why the volume change cannot be suppressed is presumed that, when the crystallite size is too small, strain in the crystal structure of the silicon clathrate II type crystal phase is easily generated, and the crystal structure cannot be maintained.

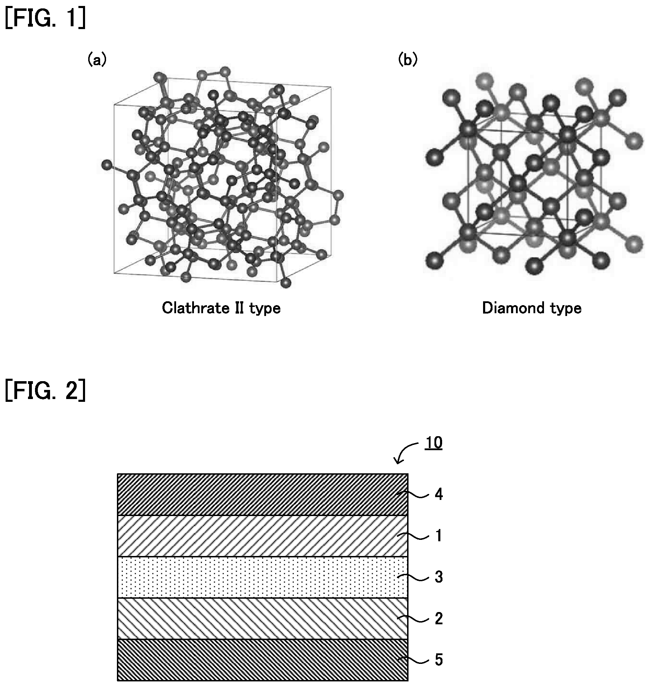

Also, the electrode active material in the present disclosure includes a silicon clathrate II type crystal phase. As shown in FIG. 1(a), in the silicon clathrate II type crystal phase, a plurality of Si elements form a polyhedron (cage) including pentagons and hexagons. This polyhedron has a space inside to include metal ions such as Li ions. The metal ions are intercalated to this space to inhibit the volume change due to charge and discharge. Particularly in an all solid state battery, in order to suppress the volume change due to charge and discharge, in general, it is necessary to apply a high restraining pressure, but by using the electrode active material in the present disclosure, reduction of the restraining pressure can be achieved, and as a result, the increase in size of the restraining jig can be suppressed. Meanwhile, as shown in FIG. 1(b), in the diamond type silicon crystal phase, a plurality of Si elements form a tetrahedron. The tetrahedron does not have a space inside to include metal ions such as Li ions, and thus its volume change due to charge and discharge cannot be easily suppressed by the diamond type silicon crystal phase compared to the silicon clathrate II type crystal phase. However, there is some cases where the volume change due to charge and discharge can be suppressed when the electrode active material includes a little diamond type silicon crystal phase.

The electrode active material in the present disclosure includes a silicon clathrate II type crystal phase. Also, the crystallite size of the silicon clathrate II type crystal phase is usually 125 nm or more and 215 nm or less, and may be 130 nm or more and 180 nm or less. When the crystallite size is in the specified range, the volume change of the electrode active material due to charge and discharge is small. The crystallite size of the crystal phase can be obtained by performing a Rietvelt analysis to the XRD measurement result, and using the analysis result, a RIR method (Reference Intensity Ratio method), and Scherrer equation.

The electrode active material in the present disclosure preferably includes the silicon clathrate II type crystal phase as a main phase. "Main phase" means that the peak belonging to that crystal phase has the largest diffraction intensity among the peaks observed in an X-ray diffraction measurement. The ratio of the silicon clathrate II type crystal phase included in the electrode active material is, for example, 80 weight% or more, may be 85 weight% or more, may be 90 weight% or more, and may be 95 weight% or more. Also, the ratio of the silicon clathrate II type crystal phase included in the electrode active material may be 100 weight%, and may be less than 100 weight%. The ratio of the crystal phase can be obtained by performing a Rietvelt analysis to the XRD measurement result, and using the analysis result and a RIR method (Reference Intensity Ratio method).

The silicon clathrate II type crystal phase usually belongs to the space group Fd-3m. In an X-ray diffraction measurement using a CuKα ray, the silicon clathrate II type crystal phase has typical peaks at the positions of $2\theta = 20.09°$, 21.00°, 26.51°, 31.72°, 36.26°, and 53.01°. Each of these peaks may shift in the range of $\pm$ 0.50°, may shift in the range of $\pm$ 0.30°, and may shift in the range of $\pm$ 0.10°.

In the silicon clathrate II type crystal phase, a peak positioned at $2\theta = 20.09° \pm 0.50°$ is regarded as peak A, and a peak positioned at $2\theta = 31.72° \pm 0.50°$ is regarded as peak B. Also, the intensity of the peak A is regarded as $I_A$, and the intensity of the peak B is regarded as $I_B$. Meanwhile, the maximum intensity in $2\theta = 22°$ to 23° is regarded as $I_M$. Since $2\theta = 22°$ to 23° is the range where peaks of crystal phase relating to Si does not usually appear, it can be used as the basis.

The value of $I_A/I_M$ is preferably larger than 1. When the value of $I_A/I_M$ is 1 or less, it can be judged that the silicon clathrate II type crystal phase is substantially not formed. The value of $I_A/I_M$ is, for example, 1.75 or more and may be 1.80 or more. Meanwhile, the value of $I_A/I_M$ is, for example, 10 or less, and may be 5 or less.

The value of $I_B/I_M$ is preferably larger than 1. When the value of $I_B/I_M$ is 1 or less, it can be judged that the silicon clathrate II type crystal phase is substantially not formed. The value of $I_B/I_M$ is, for example, 1.35 or more, and may be 1.40 or more. Meanwhile, the value of $I_B/I_M$ is, for example, 7 or less, and may be 4 or less.

The electrode active material in the present disclosure may or may not include a silicon clathrate I type crystal phase. "Not including a crystal phase" means that peaks of that crystal phase are not confirmed by an X-ray diffraction measurement. The silicon clathrate I type crystal phase usually belongs to a space group (Pm-3n). The silicon clathrate I type crystal phase has typical peaks at the positions of $2\theta = 19.44°$, 21.32°, 30.33°, 31.60°, 32.82°, 36.29°, 52.39°, and 55.49° in an X-ray diffraction measurement using a CuKα ray. Each of these peaks may shift in the range of $\pm$ 0.50°, may shift in the range of $\pm$ 0.30°, and may shift in the range of $\pm$ 0.10°.

The electrode active material in the present disclosure may or may not include a diamond type silicon crystal phase. The ratio of the diamond type silicon crystal phase included in the electrode active material is, for example, 0 weight%, may be larger than 0 weight%, and may be 0.2 weight% or more. Meanwhile, the ratio of the diamond type silicon crystal phase included in the electrode active material is, for example, 5 weight% or less, and may be 3 weight% or less. Also, in an X-ray diffraction measurement using a CuKα ray, the diamond type silicon crystal phase has typical peaks at the positions of $2\theta = 28.44°$, 47.31°, 56.10°, 69.17°, and 76.37°. Each of these peaks may shift in the range of $\pm$ 0.50°, may shift in the range of $\pm$ 0.30°, and may shift in the range of $\pm$ 0.10°.

When a peak C positioned at $2\theta = 28.44° \pm 0.50°$ is observed as the peak of the diamond type silicon crystal phase, the intensity of the peak C is regarded as $I_C$. $I_A/I_C$ is, for example, larger than 1, may be 1.5 or more, may be 2 or more, and may be 3 or more. Preferable range of $I_B/I_C$ is the same as the preferable range of $I_A/I_C$.

The composition of the electrode active material in the present disclosure is not particularly limited, but is preferably represented by $Na_xSi_{136}$ ($0 \le x \le 24$). The "x" may be 0 and may be larger than 0. Meanwhile, the "x" may be 20 or less, may be 10 or less, and may be 5 or less. The composition of the electrode active material may be obtained by, for example, EDX, XRD, XRF, ICP, and an atomic absorption method. Incidentally, on the surface of the electrode active material, in general, an inevitable oxidized film is formed. For this reason, the electrode active material may contain a little amount of O (oxygen). Also, the electrode active material may contain a little amount of C (carbon) derived from the production steps.

The electrode active material in the present disclosure may be a primary particle, and may be a secondary particle which is aggregation of the primary particles. The average particle size ($D_{50}$) of the electrode active material is not particularly limited, and for example, it is 0.1 μm or more and 50 μm or less, and may be 0.5 μm or more and 30 μm or less. The average particle size ($D_{50}$) may be calculated from, for example, a measurement with a scanning electron microscope (SEM).

The electrode active material preferably includes a void inside the primary particle. The rate of the void (void rate) in the primary particle is, for example, 4% or more, and may be 10% or more. Also, the void rate is, for example, 40% or less and may be 20% or less. The void rate can be obtained by, for example, in the following procedures. First, an ion milling processing is performed to the electrode layer including the electrode active material to take out the cross-section. Then, the cross-section is observed by a SEM (scanning electron microscope) to obtain a picture of particles. From the obtained picture, a silicon portion and the void portion are distinguished using an image analyzing software, and binarized. The areas of the silicon portion and the void portion are obtained, and the void rate (%) is calculated from the below equation.

Void rate (%) = 100 * (Area of void portion) / ((Area of silicon portion) + (Area of void portion))

It is preferable that the electrode active material in the present disclosure includes a lot of minute voids with the pore diameter of 10 nm or less. The voids of which pore diameter is 10 nm or less can store the deposited Li with high filling rate compared to the voids of which pore diameter is larger than 10 nm, and thus the increase in restraining pressure can be reduced. The void amount X (integrating hole volume) of the voids of which pore diameter is 10 nm or less is, for example, 0.015 cc/g or more, may be 0.0167 cc/g or more, may be 0.020 cc/g or more, may be 0.023 cc/g or more, and may be more than 0.0337 cc/g. Meanwhile, the void amount X is, for example, 0.09 cc/g or less. The void amount X may be obtained by, for example, a mercury porosimeter measurement, a BET measurement, a gas absorption method, 3D-SEM, and 3D-TEM. The measurement method for a void amount other than the void amount X is the same.

It is preferable that the electrode active material in the present disclosure includes a lot of minute voids with the pore diameter of 50 nm or less. The voids of which pore diameter is 50 nm or less can further prevent the voids from being crushed by pressing compared to the voids of which pore diameter is 100 nm or less. The void amount Y of the voids of which pore diameter is 50 nm or less is, for example, 0.05 cc/g or more, may be more than 0.065 cc/g, may be 0.072 cc/g or more, may be 0.083 cc/g or more, and may be 0.10 cc/g or more. Meanwhile, the void amount Y is, for example, 0.25 cc/g or less, and may be 0.22 cc/g or less.

The rate of the void amount X with respect to the void amount Y (X/Y) is preferably much. The X/Y is, for example, 0.17 or more, may be 0.19 or more, and may be 0.21 or more. Meanwhile, the X/ Y is, for example, 0.41 or less.

It is preferable that the electrode active material in the present disclosure includes a lot of minute voids with the pore diameter of 100 nm or less. The voids of which pore diameter is 100 nm or less can prevent the voids from being crushed by pressing, compared to the voids of which pore diameter is larger than 100 nm. The void amount Z of the voids of which pore diameter is 100 nm or less is, for example, 0.05 cc/g or more, may be 0.07 cc/g or more, may be 0.10 cc/g or more, and may be 0.12 cc/g or more. Meanwhile, the void amount Z is, for example, 0.40 cc/g or less, may be 0.39 cc/g or less, and may be 0.35 cc/g or less.

The rate of the void amount X with respect to the void amount Z (X/Z) is preferably much. The X/Z is, for example, 0.10 or more, may be 0.14 or more, and may be 0.16 or more. Meanwhile, the X/Z is, for example, 0.34 or less.

The electrode active material in the present disclosure is usually used for a battery. The electrode active material in the present disclosure may be an anode active material and may be a cathode active material, but the former is preferable. Examples of the method for producing the electrode active material may include the production method described in "D. Method for producing electrode active material" later.

B. Electrode mixture

The electrode mixture in the present disclosure contains the above described electrode active material, and at least one of a conductive material and a binder.

According to the present disclosure, usage of the above described electrode active material allows the electrode mixture to have less volume change due to charge and discharge.

The electrode mixture contains the electrode active material and at least one of a conductive material and a binder. The electrode active material is in the same contents as those described in "A. Electrode active material" above. The electrode active material may be an anode active material and may be a cathode active material, but the former is preferable. In other words, the electrode mixture may be an anode mixture, and may be a cathode mixture, but the former is preferable.

The ratio of the electrode active material in the electrode mixture is, for example, 20 weight% or more, may be 30 weight% or more and may be 40 weight% or more. If the ratio of the electrode active material is too little, there is a possibility that sufficient energy density may not be obtained. Meanwhile, the ratio of the electrode active material is, for example, 80 weight% or less, may be 70 weight% or less, and may be 60 weight% or less. If the ratio of the electrode active material is too much, there is a possibility that the ion conductivity and the electron conductivity in the electrode mixture may be relatively degraded.

The electrode mixture contains at least one of a conductive material and a binder. Examples of the conductive material may include a carbon material, a metal particle, and a conductive polymer. Examples of the carbon material may include a particulate carbon material such as acetylene black (AB) and Ketjen black (KB), and a fiber carbon material such as carbon fiber, carbon nanotube (CNT), and carbon nanofiber (CNF). Further, examples of the binder may include a rubber-based binder and a fluoride-based binder.

The electrode mixture may further contain a solid electrolyte. Examples of the solid electrolyte may include an inorganic solid electrolyte such as a sulfide solid electrolyte, an oxide solid electrolyte, a nitride solid electrolyte, and a halide solid electrolyte; and an organic polymer electrolyte such as a polymer electrolyte. Examples of the sulfide solid electrolyte may include a solid electrolyte containing a Li element, an X element (X is at least one kind of P, As, Sb, Si, Ge, Sn, B, Al, Ga, and In), and a S element. Also, the sulfide solid electrolyte may further contain at least one of an O element and a halogen element. Examples of the halogen element may include a F element, a Cl element, a Br element, and an I element. The sulfide solid electrolyte may be glass (amorphous), and may be a glass ceramic. Examples of the sulfide solid electrolyte may include $Li_2S-P_2S_5$, $LiI-Li_2S-P_2S_5$, $LiI-LiBr-Li_2S-P_2S_5$, $Li_2S-SiS_2$, $Li_2S-GeS_2$, and $Li_2S-P_2S_5-GeS_2$. Also, the electrode mixture may further contain a dispersion medium.

C. Battery

FIG. 2 is a schematic cross-sectional view exemplifying the battery in the present disclosure. Battery 10 shown in FIG. 2 includes cathode layer 1, anode layer 2, electrolyte layer 3 arranged between the cathode layer 1 and the anode layer 2, cathode current collector 4 for collecting currents of the cathode layer 1, and anode current collector 5 for collecting currents of the anode layer 2. In the present disclosure, the cathode layer 1 or the anode layer 2 contains the electrode mixture described in "B. Electrode mixture" above.

According to the present disclosure, usage of the above described electrode mixture allows a battery to have less volume change due to charge and discharge. As described above, the electrode mixture may be an anode mixture and may be a cathode mixture, but the former is preferable. Details of the battery when the electrode mixture is the anode mixture will be hereinafter explained.

1. Anode layer

The anode layer in the present disclosure contains the above described electrode mixture (anode mixture). The electrode mixture is in the same contents as those described in "B. Electrode mixture" above; thus, the descriptions herein are omitted. Also, the anode layer may contain an electrolyte as required. The electrolyte is in the same contents as those described in "3. Electrolyte layer". The thickness of the anode layer is, for example, 0.1 $\mu$m or more and 1000 $\mu$m or less, may be 0.1 $\mu$m or more and 500 $\mu$m or less, and may be 0.1 $\mu$m or more and 100 $\mu$m or less. Also, examples of the method for forming the anode layer may include a method in which the electrode mixture (anode mixture) is applied on the anode current collector.

2. Cathode layer

The cathode layer is a layer containing at least a cathode active material. Also, the cathode layer may contain at least one of an electrolyte, a conductive material, and a binder, as required.

Examples of the cathode active material may include an oxide active material. Examples of the oxide active material may include a rock salt bed type active material such as $LiCoO_2$, $LiMnO_2$, $LiNiO_2$, $LiVO_2$, and $LiNi_{1/3}Co_{1/3}Mn_{1/3}O_2$; a spinel type active material such as $LiMn_2O_4$, $Li_4Ti_5O_{12}$, and $Li(Ni_{0.5}Mn_{1.5})O_4$; and an olivine type active material such as $LiFePO_4$, $LiMnPO_4$, $LiNiPO_4$, and $LiCoPO_4$.

A coating layer containing Li-ion conductive oxide may be formed on the surface of the oxide active material. The reason therefor is to inhibit the reaction of the oxide active material and the solid electrolyte (particularly a sulfide solid electrolyte). Examples of the Li-ion conductive oxide may include $LiNbO_3$. The thickness of the coating layer is, for example, 1 nm or more and 30 nm or less. Also, as the cathode active material, for example, $Li_2S$ can be used.

Examples of the shape of the cathode active material may include a granular shape. The average particle size ($D_{50}$) of the cathode active material is not particularly limited, and for example, it is 10 nm or more, and may be 100 nm or more. Meanwhile, the average particle size ($D_{50}$) of the cathode active material is, for example, 50 $\mu$m or less, and may be 20 $\mu$m or less.

The electrolyte used for the cathode layer is in the same contents as those described in "3. Electrolyte layer". Also, the conductive material and the binder to be used for the cathode layer are in the same contents as those described in "B. Electrode mixture" above; thus, the descriptions herein are omitted. The thickness of the cathode layer is, for example, 0.1 $\mu$m or more and 1000 $\mu$m or less, may be 0.1 $\mu$m or more and 500 $\mu$m or less, and may be 0.1 $\mu$m or more and 100 $\mu$m or less.

3. Electrolyte layer

The electrolyte layer is a layer formed between the cathode layer and the anode layer, and contains at least an electrolyte. The electrolyte may be a solid electrolyte and may be an electrolyte solution (liquid electrolyte).

The solid electrolyte is in the same contents as those described in "B. Electrode layer" above; thus, the descriptions herein are omitted. Meanwhile, the liquid electrolyte preferably contains a supporting salt and a solvent. Examples of the supporting electrolyte (lithium salt) of the electrolyte including lithium ion conductivity may include an inorganic lithium salt such as $LiPF_6$, $LiBF_4$, $LiClO_4$, and $LiAsF_6$; and an organic lithium salt such as $LiCF_3SO_3$, $LiN(CF_3SO_2)_2$, $LiN(C_2F_5SO_2)_2$, $LiN(FSO_2)_2$, and $LiC(CF_3SO_2)_3$. Examples of the solvent used for the electrolyte may include a cyclic ester (cyclic carbonate) such as ethylene carbonate (EC), propylene carbonate (PC) and butylene carbonate (BC); and a chain ester (chain carbonate) such as dimethyl carbonate (DMC), diethyl carbonate (DEC), and ethyl methyl carbonate (EMC). It is preferable that the liquid electrolyte contains two kinds or more of the solvent.

The thickness of the electrolyte layer is, for example, 0.1 $\mu$m or more and 1000 $\mu$m or less, may be 0.1 $\mu$m or more and 500 $\mu$m or less, and may be 0.1 $\mu$m or more and 100 $\mu$m or less.

4. Other constitutions

The battery in the present disclosure preferably includes a cathode current collector for collecting currents of the cathode layer, and an anode current collector for collecting currents of the anode layer. Examples of the material for the cathode current collector may include SUS, aluminum, nickel, iron, titanium, and carbon. Meanwhile, examples of the material for the anode current collector may include SUS, copper, nickel, and carbon.

The battery in the present disclosure may further include a restraining jig that applies a restraining pressure along with the thickness direction of the cathode layer, the electrolyte layer and the anode layer. In particular, when the electrolyte layer is a solid electrolyte layer, it is preferable to apply a restraining pressure to form excellent ion conducting path and electron conducting path. The restraining pressure is, for example, 0.1 MPa or more, may be 1 MPa or more, and may be 5 MPa or more. Meanwhile, the restraining pressure is, for example, 100 MPa or less, may be 50 MPa or less, and may be 20 MPa or less.

5. Battery

The kind of the battery in the present disclosure is not particularly limited, but is typically a lithium ion battery. Also, the battery in the present disclosure may be a liquid battery that contains a liquid electrolyte as the electrolyte layer, and may be an all solid state battery that contains a solid electrolyte layer as an electrolyte layer. Also, the battery in the present disclosure may be a primary battery and may be a secondary battery, but preferably a secondary battery among them. The reason therefor is to be repeatedly charged and discharged and useful as a car-mounted battery for example.

Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

D. Method for producing electrode active material

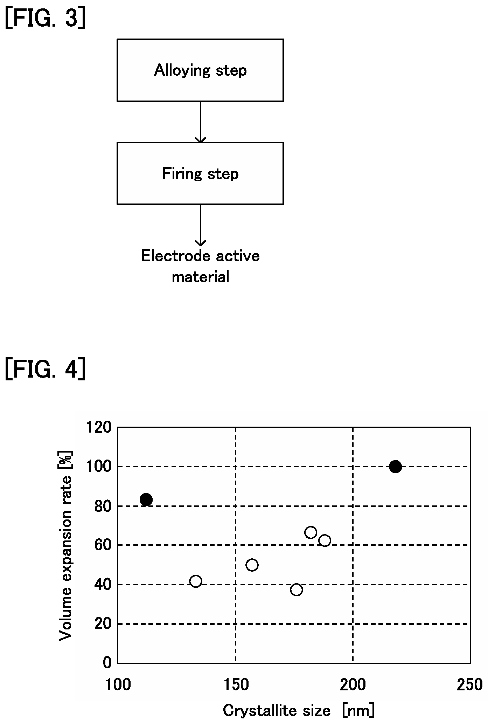

FIG. 3 is a flow chart exemplifying the method for producing the electrode active material in the present disclosure. In the production method shown in FIG. 3, first, a Na-Si alloy is obtained by bringing a Na source and a Si source into reaction (an alloying step). Next, a Na-Si alloy is fired to reduce an amount of Na in the Na-Si alloy and generate a silicon clathrate II type crystal phase (firing step). Also, the firing step includes at least a first firing treatment of firing the Na-Si alloy at a temperature of less than 340°C, and a second firing treatment of firing a compound subjected to the first firing treatment at a temperature of 340°C or more. In the firing step, it is preferable to adjust a firing condition so that a crystallite size of the silicon clathrate II type crystal phase becomes 125 nm or more and 215 nm or less.

According to the present disclosure, by performing the first firing treatment and the second firing treatment in the firing step, an electrode active material of which volume change due to charge and discharge is small can be obtained.

1. Alloying step

The alloying step in the present disclosure is a step of obtaining a Na-Si alloy by bringing a Na source and a Si source into reaction.

The Si source is a particle containing at least Si. The Si source may be a simple substance of Si, and may be an alloy of Si with other metals. When the Si source is an alloy, the alloy preferably contains Si as a main component. The ratio of Si in the alloy is, for example, 50 at% or more, may be 70 at% or more, and may be 90 at% or more.

The Si source is preferable a porous Si including a lot of voids inside the primary particle. Examples of the method for producing the Si source (porous Si) may include a method in which an alloy of Li with Si (Li-Si alloy) is produced and then Li is removed from the Li-Si alloy. The Li-Si alloy may be obtained by, for example, mixing Li and Si. The rate of Li with respect to Si, which is Li/Si is, for example, 1.0 or more, may be 2.0 or more, may be 3.0 or more, and may be 4.0 or more. Meanwhile, Li/Si is, for example, 8.0 or less. Examples of the method for removing Li from the Li-Si alloy may include a method in which the Li-Si alloy is brought into reacting with Li extracting agent. Examples of the Li extracting agent may include alcohol such as methanol, ethanol, 1-propanol, 1-butanol, 1-pentanol, and 1-hexanol; and acid such as acetic acid, formic acid, propionic acid, and oxalic acid.

Also, examples of the method for producing the Si source (porous Si) may include a method in which an alloy of Mg with Si (Mg-Si alloy) is produced, and then Mg is removed from the Mg-Si alloy. The Mg-Si alloy can be obtained by, for example, heating a mixture of Mg and Si. The rate of Mg with respect to Si, which is Mg/Si is, for example, 1.0 or more, may be 1.5 or more, and may be 2.0 or more. Meanwhile, Mg/Si is, for example, 6.0 or less. Examples of the method for removing Mg from the Mg-Si alloy may include a method in which Mg in the Mg-Si alloy is changed to MgO by heating the Mg-Si alloy in an inert gas atmosphere containing oxygen, and then MgO is removed by an acid solution. Examples of the acid solution may include an aqueous solution containing hydrochloric acid (HCl) and hydrogen fluoride (HF).

Also, examples of the method for producing the Si source (porous Si) may include a method in which an alloy of Mg with Si (Mg-Si alloy) is produced, and then Mg is removed from the Mg-Si alloy, and thereafter an alloy of Li with Si obtained by removing Mg (Li-Si alloy) is produced, and then Li is removed from the Li-Si alloy.

Meanwhile, the Na source contains at least Na. Examples of the Na source may include a metal Na, NaH, and a metal Na dispersion in which metal Na particles are dispersed in an oil.

Examples of the method for obtaining the Na-Si alloy by bringing the Na source and the Si source into reaction may include a method in which a mixture including the Na source and the Si source is heated. The heating temperature is, for example, 300°C or more, may be 310°C or more, may be 320°C or more, and may be 340°C or more. Meanwhile, the heating temperature is, for example, 800°C or less, may be 600°C or less, and may be 450°C or less. Also, the alloying step is preferably performed under an inert atmosphere such as an Ar atmosphere.

The Na-Si alloy preferably includes a Zintl phase. The Zintl phase includes typical peaks at the positions of $2\theta =$ 16.10°, 16.56°, 17.64°, 20.16°, 27.96°, 33.60°, 35.68°, 40.22°, and 41.14° in an X-ray diffraction measurement using a CuK$\alpha$ ray. Each of these peaks may shift in the range of $\pm 0.50$°, and may shift in the range of $\pm 0.30$°. The Na-Si alloy preferably includes the Zintl phase as a main phase.

The composition of the Na-Si alloy is not particularly limited, but is preferably represented by the composition of $Na_z Si_{136}$ ($121 \leq z \leq 151$). The "z" may be 126 or more, and may be 131 or more. Meanwhile, the "z" may be 141 or less. There may be additional element other than Na and Si in the Na-Si alloy. Examples of the additional element may include Li, K, Rb, Cs, Ba, Ga, and Ge.

2. Firing step

The firing step in the present disclosure is a step of firing the Na-Si alloy to decrease Na amount in the Na-Si alloy and generate a silicon clathrate II type crystal phase.

The crystallite size of the silicon clathrate II type crystal phase can be controlled by adjusting the firing condition. In specific, the crystallite size can be adjusted by considering the balance of nucleation and growth at the time of firing. The balance of nucleation and growth at the time of firing may be controlled by, for example, a firing temperature. Here, in order to form a silicon clathrate II type crystal phase from a Zintl phase included in the Na-Si alloy, firing at a high temperature to the certain extent is necessary. In specific, the Na-Si alloy needs firing at a temperature of 340°C or more. Meanwhile, when firing at a temperature of 340°C or more is performed, nucleus growth of the silicon clathrate II type crystal phase is prioritized over nucleation of the silicon clathrate II type crystal phase, and thus the crystallite size of the silicon clathrate II type crystal phase tends to be large.

In contrast, when a firing at a temperature of less than 340°C is performed before performing the firing at a temperature of 340°C or more, the nucleation is prioritized over the nucleus growth, and the crystallite size can be made small. In other words, the firing step usually includes at least a first firing treatment of firing the Na-Si alloy at a temperature of less than 340°C, and a second firing treatment of firing a compound subjected to the first firing treatment at a temperature of 340°C or more. Also, in the firing step, it is preferable to adjust a firing condition so that a crystallite size of the silicon clathrate II type crystal phase becomes 125 nm or more and 215 nm or less.

The first firing treatment is a treatment of firing the Na-Si alloy at a temperature of less than 340°C. In the first firing treatment, the later described capturing agent may or may not be used. The firing temperature in the first firing treatment is usually less than 340°C, may be less than 310°C, and may be 300°C or less. Meanwhile, the firing temperature in the first firing treatment is, for example, 250°C or more, may be 270°C or more, and may be 280°C or more. The firing time in the first firing treatment is, for example, 1 hour or more and 50 hours or less, and may be 5 hours or more and 30 hours or less.

The second firing treatment is a treatment of firing a compound subjected to the first firing treatment at a temperature of 340°C or more. In the second firing treatment, it is preferable to use the later described capturing agent, and above all, preferable to use $AlF_3$. The firing temperature in the second firing treatment is, for example, usually 340°C or more, and may be 360°C or more. Meanwhile, the firing temperature in the second firing treatment may be, for example 450°C or less. The firing time in the second firing treatment is, for example, 1 hour or more and 120 hours or less, and may be 10 hours or more and 80 hours or less. The compound subjected to the second firing treatment preferably has the silicon clathrate II type crystal phase.

The firing step may include a third firing treatment of firing a compound subjected to the second firing treatment at a temperature of 340°C or more. In the third firing treatment, it is preferable to use the later described capturing agent, and above all, preferable to use $ZnCl_2$. The firing temperature in the third firing treatment is, usually 340°C or more, and may be 360°C or more. Meanwhile, the firing temperature in the third firing treatment may be, for example 450°C or less. The firing time in the third firing treatment is, for example, 1 hour or more and 120 hours or less, and may be 10 hours or more and 80 hours or less. The compound subjected to the third firing treatment preferably has the silicon clathrate II type crystal phase as a main phase.

In the firing step, a capturing agent that captures Na in the Na-Si alloy is preferably used. Examples of the capturing agent may include a Na getter agent that reacts with a vapor of Na generated from the Na-Si alloy. The Na getter agent is, for example, arranged in a state not in contact with the Na-Si alloy. Examples of the Na getter agent may include $SiO$, $MoO_3$, $FeO$, and $Fe_3O_4$. In the case of using the Na getter agent, the firing step is preferably performed in the reduced pressure atmosphere.

Other examples of the capturing agent may include a Na trapping agent that directly reacts with the Na-Si alloy and receives Na. The Na trapping agent is, for example, arranged in a state in contact with the Na-Si alloy. Examples of the Na trapping agent may include $CaCl_2$, $AlF_3$, $CaBr_2$, $CaI_2$, $Fe_3O_4$, $FeO$, $MgCl_2$, $ZnO$, $ZnCl_2$, and $MnCl_2$. In the case of using the Na trapping agent, the burning step may be performed in a reduced pressure atmosphere, and may be performed in a normal pressure atmosphere.

Also, the balance of nucleation and growth at the time of firing may be controlled by, for example, the kind, particle size, and addition amount of the capturing agent. For example, by making the particle size of the Na trapping gent that is the capturing agent small, the contact area of the Na trapping agent and the Na-Si alloy increases. Thereby, Na can be easily pulled out from the Na-Si alloy, the nucleation is prioritized over the nucleus growth, and the crystallite size can be adjusted to be small. Meanwhile, if the contact area of the Na trapping agent and the Na-Si alloy increases too much, it is presumed that the diamond type silicon crystal phase, which is more stable than the silicon clathrate II type crystal phase, will be easily generated.

3. Electrode active material

The electrode active material obtained by each steps described above includes the silicon clathrate II type crystal phase. Also, the crystallite size of the silicon clathrate II type crystal phase is preferably in the specified range. Preferable aspects of the electrode active material are in the same contents as those described in "A. Electrode active material" above.

E. Method for producing electrode mixture

The present disclosure provides a method for producing an electrode mixture, the method including: a preparing step of preparing an electrode active material by the above described method for producing an electrode active material; and a mixing step of mixing the electrode active material and at least one of a conductive material and a binder to obtain an electrode mixture.

According to the present disclosure, by using the above described electrode active material, the electrode mixture of which volume change due to charge and discharge is small can be obtained. The preparing step is in the same contents as those described in "D. Method for producing electrode active material" above.

The electrode mixture usually contains the electrode active material, and at least one of a conductive material and a binder. The conductive material and the binder are in the same contents as those described in "B. Electrode mixture" above. The electrode mixture may or may not further include a dispersion medium. Also, the electrode mixture is usually obtained by mixing the electrode active material and at least one of the conductive material and the binder. There are no particular limitations on the method for mixing, and known methods can be used. Also, preferable aspects of the electrode mixture to be obtained are in the same contents as those described in "B. Electrode mixture" above.

F. Method for producing battery

The present disclosure provides a method for producing a battery, the method including: a preparing step of preparing an electrode active material by the above described method for producing an electrode active material; a mixing step of mixing the electrode active material and at least one of a conductive material and a binder to obtain an electrode mixture; and an electrode layer forming step of forming an electrode layer using the electrode mixture.

According to the present disclosure, by using the above described electrode active material, the battery of which volume change due to charge and discharge is small can be obtained. The preparing step and the mixing step are in the same contents as those described in "D. Method for producing electrode active material" above and "E. Method for producing electrode mixture" above.

The electrode layer forming step is a step of forming an electrode layer using the electrode mixture. There are no particular limitations on the method for forming the electrode layer, and known methods can be used. Examples of the method for forming the electrode layer may include a method in which the electrode mixture is applied on the electrode current collector. On the occasion of forming the electrode layer, a pressing treatment of pressing the electrode layer in a thickness direction may be performed. Examples of the pressing treatment may include a roller pressing and a flat plate pressing. Also, when the electrode mixture is a slurry containing a dispersion medium, drying is preferably performed after applying the electrode mixture on the electrode current collector.

The electrode layer forming step may be a cathode layer forming step of forming a cathode layer, and may be an anode layer forming step of forming an anode layer. Also, there are no particular limitations on the method for forming the battery, and known methods can be used. Also, preferable aspects of the battery to be obtained are in the same contents as those described in "C. Battery" above.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Example 1]

A metal Li and a Si powder (SIEPB32, from Kojundo Chemical Laboratory Co., Ltd.) were weighed under an Ar atmosphere so as to be 4 : 1 in the molar ratio, mixed with a mortar for 1 hour, and thereby a Li-Si alloy including $Li_{15}Si_4$ phase was obtained. The obtained Li-Si alloy was brought into reaction with ethanol under an Ar atmosphere. After that, an acetic acid was added and filtrated to separate the liquid component and the solid component. The separated solid component was vacuum-dried at 120°C to obtain a powder porous Si.

The obtained porous Si and NaH which was a Na source were weighed so as to be the NaH / porous Si = 1.1 / 1 in the molar ratio, and mixed using a cutter mill. The obtained mixture was put in a reaction container, fired in the conditions of an Ar atmosphere, 475°C, and 10 hours, and thereby a Na-Si alloy was obtained.

The obtained Na-Si alloy and $AlF_3$ which was a Na trapping agent were mixed. As the $AlF_3$, a sieve with a mesh size of 35 $\mu$m and a sieve with a mesh size of 75 $\mu$m classified were used. To the obtained mixture, a first firing treatment in the conditions of an Ar atmosphere, 290°C and 10 hours was performed, and then a second firing treatment in the conditions of an Ar atmosphere, 340°C and 40 hours was performed. After that, obtained compound was put in a $HNO_3$ aqueous solution having a concentration of 6 weight%, and stirred for 1 hour. After that, the stirred compound was filtrated, the solid content was dried in the conditions of 120°C and 12 hours, and thereby a powder was obtained.

The obtained powder and zinc chloride ($ZnCl_2$) were weighed so as to be the powder : $ZnCl_2$ = 6 : 1 in the molar ratio, and mixed using a cutter mill. The obtained mixture was subjected to a third firing treatment in the conditions of an Ar atmosphere, 345°C and 15 hours. After that, obtained compound was put in a $HNO_3$ aqueous solution having a concentration of 6 weight%, and stirred for 1 hour. After that, the stirred compound was filtrated, the solid content was dried in the conditions of 120°C and 12 hours, and thereby a powder was obtained.

The obtained powder was put in a hydrogen fluoride (HF) aqueous solution having a concentration of 3 weight%, and stirred for 3 hour. After that, the stirred compound was vacuum-filtrated, the solid content was dried in the conditions of 120°C and 12 hours, and thereby a powder was obtained. After drying, the obtained powder was put into acetone, rough powder was removed using a sieve made of a resin, and thereby an electrode active material was obtained.

[Example 2]

An electrode active material was obtained in the same manner as in Example 1 except that the second firing treatment was performed in the conditions of an Ar atmosphere, 340°C and 80 hours.

[Example 3]

An electrode active material was obtained in the same manner as in Example 1 except that the second firing treatment was performed in the conditions of an Ar atmosphere, 340°C and 60 hours.

[Example 4]

An electrode active material was obtained in the same manner as in Example 1 except that the first firing treatment was performed in the conditions of an Ar atmosphere, 280°C and 10 hours, and the second firing treatment was performed in the conditions of an Ar atmosphere, 340°C and 20 hours.

[Example 5]

An electrode active material was obtained in the same manner as in Example 1 except that the first firing treatment was performed in the conditions of an Ar atmosphere, 280°C and 10 hours, and the second firing treatment was performed in the conditions of an Ar atmosphere, 340°C and 100 hours.

[Comparative Example 1]

An electrode active material was obtained in the same manner as in Example 1 except that the first firing treatment was performed in the conditions of an Ar atmosphere, 340°C and 10 hours, and the second firing treatment was performed in the conditions of an Ar atmosphere, 340°C and 120 hours.

[Comparative Example 2]

The AlF$_3$ was put in a container together with crushing balls ($\varphi$ 1 $\mu$m), and atomized using a planetary ball mill (Fritsch), in the conditions of 200 rpm and 3 hours. An electrode active material was obtained in the same manner as in Example 1 except that the atomized AlF$_3$ was used, the first firing treatment was performed in the conditions of an Ar atmosphere, 310°C and 10 hours, and the second firing treatment was performed in the conditions of an Ar atmosphere, 340°C and 10 hours.

[Evaluation]

<XRD measurement>

An X-ray diffraction (XRD) measurement using CuK$\alpha$ ray was respectively conducted to the electrode active materials obtained in Examples 1 to 5 and Comparative Examples 1 and 2. As a result, it was confirmed that all the electrode active materials had the silicon clathrate II type crystal phase as a main phase.

In the silicon clathrate II type crystal phase, an intensity of peak A positioned in the vicinity of $2\theta = 20.09°$ was regarded as I$_A$, and an intensity of peak B positioned in the vicinity of $2\theta = 31.72°$ was regarded as I$_B$. Also, the maximum intensity in $2\theta = 22°$ to $23°$ was regarded as I$_M$, and I$_A$/I$_M$ and I$_B$/I$_M$ were obtained. As a result, I$_A$/I$_M$ was larger than 1 and I$_B$/I$_M$ was larger than 1 in all the electrode active materials obtained in Examples 1 to 5 and Comparative Examples 1 and 2.

The crystallite size of the silicon clathrate II type crystal phase was obtained by performing a Rietvelt analysis with the XRD analysis software (PDXL from RIGAKU CORPORATION), and using the analysis result, a RIR method (Reference Intensity Ratio method), and Scherrer equation. The results are shown in Table 1. Also, all of the electrode active materials obtained in Examples 1 to 5 and Comparative Examples 1 and 2 had a little diamond type silicon crystal phase. The ratio (crystal Si amount) of the diamond type silicon crystal phase was obtained by the analysis result of the Rietvelt analysis and the RIR method. The results are shown in Table 1.

<SEM observation>

The average particle size (D$_{50}$) of the electrode active materials obtained in Examples 1 to 5 and Comparative Examples 1 and 2 were obtained by an observation with a scanning electron microscope (SEM). The results are shown in Table 1. As shown in Table 1, the average particle size D$_{50}$ of all the electrode active materials was about 1 $\mu$m. In this manner, the average particle size (D$_{50}$) of the anode active material is preferably 0.5 $\mu$m or more and 5 $\mu$m or less.

<Measurement of volume expansion rate>

An all solid state battery was respectively produced using the electrode active materials obtained in Examples 1 to 5 and Comparative Examples 1 and 2 as the anode active material. The production method was as follows.

(1) Production of anode

The obtained electrode active material, a sulfide solid electrolyte (Li$_2$S-P$_2$S$_5$-based glass ceramic), a conductive material (VGCF), a butyl butyrate solution containing a PVDF-based binder in the ratio of 5 weight%, and butyl butyrate were added to a container made of polypropylene, and agitated for 30 seconds by an ultrasonic dispersion device (UH-50 from SMT Corporation). Next, the container was shaken for 30 minutes by a shaker (TTM-1 from SIBATA SCIENTIFIC TECHNOLOGY LTD.). The product was applied on an anode current collector (Cu foil from UACJ) by a blade method using an applicator, and dried on a hot plate at 100°C for 30 minutes. Thereby, an anode including an anode current collector and an anode layer was obtained.

(2) Production of cathode

A cathode active material (LiNi$_{1/3}$Co$_{1/3}$Mn$_{1/3}$O$_2$, average particle diameter 6 μm), a sulfide solid electrolyte (Li$_2$S-P$_2$S$_5$-based glass ceramic), a conductive material (VGCF), a butyl butyrate solution containing a PVDF-based binder in the ratio of 5 weight%, and butyl butyrate were added to a container made of polypropylene, and agitated for 30 seconds by an ultrasonic dispersion device (UH-50 from SMT Corporation). Next, the container was shaken for 3 minutes by a shaker (TTM-1 from SIBATA SCIENTIFIC TECHNOLOGY LTD.), further agitated by the ultrasonic dispersion device for 30 seconds, and then shaken for 3 minutes by the shaker. The product was applied on a cathode current collector (Al foil from SHOWA DENKO K.K) by a blade method using an applicator, and dried on a hot plate at 100°C for 30 minutes. Thereby, a cathode including a cathode current collector and a cathode layer was obtained. Incidentally, the area of the cathode was made smaller than the area of the anode.

(3) Production of solid electrolyte layer

A sulfide solid electrolyte (Li$_2$S-P$_2$S$_5$-based glass ceramic), a heptane solution containing a butylene rubber-based binder in the ratio of 5 weight%, and heptane were added to a container made of polypropylene, and agitated for 30 seconds by an ultrasonic dispersion device (UH-50 from SMT Corporation). Next, the container was shaken for 30 minutes by a shaker (TTM-1 from SIBATA SCIENTIFIC TECHNOLOGY LTD.). The product was applied on a peeling sheet (Al foil) by a blade method using an applicator, and dried on a hot plate at 100°C for 30 minutes. Thereby, a transfer member including the peeling sheet and the solid electrolyte layer was obtained.

(4) Production of all solid state battery

A solid electrolyte layer for bonding was arranged on the cathode layer in the cathode, and installed to a roll-pressing machine, then pressed at 100 kN/cm and 165°C. Thereby, a first layered body was obtained.
Next, the anode was installed to the roll-pressing machine and pressed at 60 kN/cm and 25°C. Thereby, a pressed anode was obtained. After that, in the order from the anode layer side, the solid electrolyte layer for bonding and the transfer member were arranged. On this occasion, the solid electrolyte layer for bonding and the solid electrolyte layer in the transfer member were arranged so as to face to each other. The obtained layered body was installed to a plane uniaxial pressing machine and provisionally pressed at 100 MPa and 25°C for 10 seconds. After that, the peeling sheet was peeled off from the solid electrolyte layer. Thereby, a second layered body was obtained.
Next, the solid electrolyte layer for bonding in the first layered body and the solid electrolyte layer in the second layered body were arranged so as to face to each other, installed to a plane uniaxial pressing machine, and pressed at 200 MPa and 120°C for 1 minute. Thereby, an all solid state battery was obtained.

(5) Measurement of volume expansion rate

The obtained all solid state battery was respectively charged, and the volume expansion rate was respectively measured. The test conditions were the restraining pressure (constant rate) of 5 MPa, charge at 0.1 C, and the cut voltage of 4.55 V, and the restraining pressure at 4.55 V was measured, the restraining pressure increase amount from the state before charge was obtained, and the volume expansion rate was obtained. The results are shown in Table 1 and FIG. 4. Incidentally, the results of the volume expansion rate in Table 1 and FIG. 4 are the relative values when the result of Comparative Example 1 is regarded as 100.

[Table 1]

| | Firing temperature in the first firing treatment [°C] | Crystallite size (nm) | Crystal Si amount (wt%) | Average particle size D50 (μm) | Volume expansion rate (%) |
|---|---|---|---|---|---|
| Comp. Ex. 1 | 340 | 218 | 0.81 | 1.12 | 100 |
| Comp. Ex. 2 | 310 | 112 | 3.0 | 0.93 | 83.3 |
| Example 1 | 290 | 157 | 0.53 | 0.91 | 50.0 |
| Example 2 | 290 | 188 | 0.41 | 0.94 | 62.5 |
| Example 3 | 290 | 176 | 0.8 | 1.15 | 37.5 |
| Example 4 | 280 | 133 | 0.7 | 1.21 | 41.7 |

(continued)

|  | Firing temperature in the first firing treatment [°C] | Crystallite size (nm) | Crystal Si amount (wt%) | Average particle size D50 ($\mu$m) | Volume expansion rate (%) |
|---|---|---|---|---|---|
| Example 5 | 280 | 182 | 1.0 | 1.14 | 66.7 |

As shown in Table 1, the crystal Si amount in Example 3 and Comparative Example 1 was about the same, but there was a large difference in the volume expansion rate. Also, as shown in Table 1 and FIG. 4, it was confirmed that the volume expansion rate was smaller in Examples 1 to 5 compared to Comparative Examples 1 and 2. In this manner the reduction in volume expansion rate was achieved when the crystallite size was in the specified range. Among Examples 1 to 5, the volume expansion rate was remarkably small particularly in Example 4 (crystallite size: 133 nm), Example 1 (crystallite size : 157 nm), and Example 3 (crystallite size: 176 nm). In other words, it was confirmed that the crystallite size was particularly preferably 130 nm or more and 180 nm or less.

Reference Signs List

1    cathode layer
2    anode layer
3    electrolyte layer
4    cathode current collector
5    anode current collector
10    battery

**Claims**

1. An electrode active material comprising a silicon clathrate II type crystal phase, wherein
a crystallite size of the crystal phase is 125 nm or more and 215 nm or less.

2. The electrode active material according to claim 1, wherein the crystallite size of the crystal phase is 130 nm or more and 180 nm or less.

3. The electrode active material according to claim 1, wherein a ratio of a diamond type silicon crystal phase included in the electrode active material is 0 weight% or more and 3 weight% or less.

4. The electrode active material according to claim 1, wherein a ratio of the diamond type silicon crystal phase included in the electrode active material is 0.2 weight% or more and 3 weight% or less.

5. The electrode active material according to claim 1, wherein the electrode active material includes the silicon clathrate II type crystal phase as a main phase.

6. The electrode active material according to claim 1, wherein the electrode active material includes a void inside a primary particle.

7. The electrode active material according to claim 6, wherein a ratio of the void is 4% or more and 40% or less.

8. An electrode mixture comprising the electrode active material according to any one of claim 1 to claim 7, and at least one of a conductive material and a binder.

9. The electrode mixture according to claim 8, further comprising a solid electrolyte.

10. The electrode mixture according to claim 9, wherein the solid electrolyte included in the electrode mixture is a sulfide solid electrolyte.

11. A battery comprising a cathode layer, an anode layer, and an electrolyte layer arranged between the cathode layer and the anode layer, wherein
the cathode layer or the anode layer contains the electrode mixture according to claim 8.

12. The battery according to claim 11, wherein the anode layer contains the electrode mixture.

13. The battery according to claim 11, wherein the electrolyte layer contains a solid electrolyte.

14. The battery according to claim 13, wherein

    the solid electrolyte included in the electrolyte layer is a sulfide solid electrolyte, and
    a thickness of the electrolyte layer is 0.1 $\mu$m or more and 100 $\mu$m or less.

15. The battery according to claim 14, wherein the cathode layer includes a rock salt layered type active material.

16. A method for producing an electrode active material, the method comprising:

    an alloying step of reacting a Na source and a Si source to obtain a Na-Si alloy, and
    a firing step of firing the Na-Si alloy to reduce an amount of Na in the Na-Si alloy and generate a silicon clathrate II type crystal phase, wherein
    the firing step includes at least:

        a first firing treatment of firing the Na-Si alloy at a temperature of less than 340°C, and
        a second firing treatment of firing a compound subjected to the first firing treatment at a temperature of 340°C or more.

17. The method for producing the electrode active material according to claim 16, wherein a firing condition is adjusted in the firing step so that a crystallite size of the crystal phase becomes 125 nm or more and 215 nm or less.

18. A method for producing an electrode mixture,
the method comprising:

    a preparing step of preparing an electrode active material by the method for producing the electrode active material according to claim 16 or claim 17, and
    a mixing step of mixing the electrode active material and at least one of a conductive material and a binder to obtain an electrode mixture.

19. A method for producing a battery, the method comprising:

    a preparing step of preparing an electrode active material by the method for producing the electrode active material according to claim 16 or claim 17,
    a mixing step of mixing the electrode active material and at least one of a conductive material and a binder to obtain an electrode mixture, and
    an electrode layer forming step of forming an electrode layer using the electrode mixture.

[FIG. 1]

(a)

(b)

Clathrate II type

Diamond type

[FIG. 2]

[FIG. 3]

```
┌─────────────────────┐
│   Alloying step     │
└─────────────────────┘
          │
          ▼
┌─────────────────────┐
│    Firing step      │
└─────────────────────┘
          │
          ▼
   Electrode active
      material
```

[FIG. 4]

## INTERNATIONAL SEARCH REPORT

| International application No. |
|---|
| **PCT/JP2024/028971** |

### A. CLASSIFICATION OF SUBJECT MATTER

*H01M 4/38*(2006.01)i; *H01M 4/134*(2010.01)i; *H01M 4/1395*(2010.01)i; *H01M 4/62*(2006.01)i; *H01M 10/052*(2010.01)i; *H01M 10/0562*(2010.01)i
FI:  H01M4/38 Z; H01M4/134; H01M4/1395; H01M4/62 Z; H01M10/052; H01M10/0562

According to International Patent Classification (IPC) or to both national classification and IPC

### B. FIELDS SEARCHED

Minimum documentation searched (classification system followed by classification symbols)

H01M4/38; H01M4/134; H01M4/1395; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-034279 A (KABUSHIKI KAISHA TOYOTA JIDOSHOKKI) 01 March 2021 (2021-03-01)<br>    paragraphs [0037], [0049], [0076]-[0079], [0090], [0093]-[0097], production examples 14-15, tables 3-4 | 1-19 |
| X | JP 2021-158003 A (TOYOTA JIDOSHA KABUSHIKI KAISHA) 07 October 2021 (2021-10-07)<br>    paragraphs [0084], [0086]-[0091], [0094], table 1, example 2 | 16, 18-19 |
| A | JP 2016-066418 A (NIPPON STEEL & SUMITOMO METAL CORPORATION) 28 April 2016 (2016-04-28)<br>    paragraph [0105], example 11 of the present invention, table 1 | 1-19 |
| A | JP 2021-152990 A (TOYOTA JIDOSHA KABUSHIKI KAISHA) 30 September 2021 (2021-09-30)<br>    claim 1 | 1-19 |

☐ Further documents are listed in the continuation of Box C.          ☑ See patent family annex.

| | |
|---|---|
| \*  Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 October 2024** | **05 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/028971**

| Patent document cited in search report | | | Publication date (day/month/year) | Patent family member(s) | | | Publication date (day/month/year) |
|---|---|---|---|---|---|---|---|
| JP | 2021-034279 | A | 01 March 2021 | US paragraphs [0044], [0060], [0100]-[0107], [0122], [0124]-[0135], production examples 14-15, tables 3-4 | 2021/0066713 | A1 | |
| | | | | CN | 112447972 | A | |
| JP | 2021-158003 | A | 07 October 2021 | US paragraphs [0108]-[0120], [0124]-[0125], table 1, example 2 | 2021/0391576 | A1 | |
| | | | | US | 2024/0222625 | A1 | |
| | | | | EP | 3886220 | A1 | |
| | | | | CN | 113443630 | A | |
| | | | | KR | 10-2021-0120880 | A | |
| JP | 2016-066418 | A | 28 April 2016 | (Family: none) | | | |
| JP | 2021-152990 | A | 30 September 2021 | US claim 1 | 2021/0300768 | A1 | |
| | | | | CN | 113443632 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021158004 A